# NEUE EUROPÄISCHE PATENTSCHRIFT

(11) **EP 2 705 784 B2**
(45) Veröffentlichungstag und Bekanntmachung des Hinweises auf die Entscheidung über den Einspruch: **28.11.2018**
(45) Hinweis auf die Patenterteilung: 03.06.2015
(21) Anmeldenummer: 12401183.4
(22) Anmeldetag: 06.09.2012
(51) Int. Cl.: A47J 31/60

(54) **Getränkebereiter**
Drink preparer
Préparateur de boissons

(43) Veröffentlichungstag der Anmeldung: 12.03.2014
(73) Patentinhaber: Miele & Cie. KG, 33332 Gütersloh (DE); BWT AG, 5310 Mondsee (AT)
(72) Erfinder: Johann, Jürgen, Dr., 5310 Mondesee (AT); Last, Mario, 33739 Bielefeld (DE); Tembaak, Jutta, 49492 Westerkappeln (DE)

(56) Entgegenhaltungen:
- WO-A1-2009/092696
- WO-A2-2008/017492
- DE-A1-102009 059 174
- US-A- 4 889 041

## Beschreibung

Die Erfindung betrifft einen Getränkebereiter mit einem in das Strömungsleitungssystem des Getränkebereiters integrierten Vorratsbehälter zur Aufnahme eines Entkalkungsmittels.

Die Ablagerungen von Calziumcarbonat oder Magnesiumkarbonat stellen in Wasser führenden Strömungsleitungssystemen und technischen Geräten ein besonderes Problem dar, da sie über einen längeren Zeitraum betrachtet, deren Funktionsweise erheblich beeinträchtigen können. Calziumcarbonat und Magnesiumkarbonat werden gemeinhin auch als "Kalk" bezeichnet. Es sind bereits verschiedene Entkalkungsmittel bekannt und im Einsatz, die auf Grund einer chemischen Reaktion in der Lage sind, den "Kalk" in Strömungsleitungssystemen und technischen Geräten zu lösen. Allerdings müssen sie in regelmäßigen Abständen wiederholt zum Einsatz kommen, da sich ansonsten die Ablagerungen so weiter entwickeln können, dass die Strömungsleitungssysteme beziehungsweise die technischen Geräte unbrauchbar werden. In einem solchen Fall sind in der Regel aufwändige und kostenintensive Reparaturen erforderlich.

Aus der EP 2 265 158 B1 geht ein Getränkebereiter hervor, der einen Vorratsbehälter zur Aufnahme eines wasserlöslichen Entkalkungsmittels aufweist, der über einen Wasserzulauf mit Wasser gespeist wird. Ein Gemischauslass des Vorratsbehälters sorgt dabei dafür, dass das durch das zugeführte Wasser gelöste Entkalkungsmittel in das Strömungsleitungssystem des Getränkebereiters abgeführt wird und dort seine gewünschte Wirkung erzielt. Hierbei wird das Prinzip einer Durchlaufströmung genutzt. Dies bedeutet, das Wasser durchläuft vom Wasserzufluss zum Gemischauslass die vom Nutzer einmalig eingebrachte Dosis Entkalkungsmittel, löst dieses und wird als Gemisch am Gemischauslass in das Strömungsleitungssystem abgeführt.

Nachteilig ist bei dieser Lösung allerdings, dass der Anwender vor dem Entkalkungsvorgang zunächst je eine vorgeschriebene Dosis Entkalkungsmittel sowie Wasser in den Vorratsbehälter einfüllen muss, um erst anschließend die Entkalkung durchführen zu können. Da der Vorratsbehälter bei dieser Lösung fest im Getränkebereiter installiert ist, muss der Anwender für das Einfüllen frischen Entkalkungsmittels unmittelbar in den Getränkebereiter eingreifen, was nicht nur aufwendig ist, sondern bei möglicherweise erhitzten Teilen innerhalb des Getränkebereiters auch ein Verletzungsrisiko in sich birgt.

Der Erfindung stellt sich somit das Problem, einen Getränkebereiter bereitzustellen, dessen entleerter Vorratsbehälter möglichst einfach mit frischem Entkalkungsmittel befüllt werden kann.

Erfindungsgemäß wird dieses Problem durch einen Getränkebereiter mit den Merkmalen des Patentanspruches 1 gelöst.

Vorteilhafte Ausgestaltungen und Weiterbildungen der Erfindung ergeben sich aus den jeweils nachfolgenden Unteransprüchen.

Ein Getränkebereiter mit einem in das Strömungsleitungssystem des Getränkebereiters integrierten Vorratsbehälter zur Aufnahme eines Entkalkungsmittels, wurde erfindungsgemäß dahingehend weitergebildet, dass der Vorratsbehälter über einen Schnelllösemechanismus auswechselbar in dem Getränkebereiter aufgenommen ist.

Die mit der Erfindung erreichbaren Vorteile bestehen darin, dass der Vorratsbehälter mit nur einem oder wenigen Handgriffen aus dem Getränkebereiter entnommen werden kann. Aufwändige Montageschritte oder Eingriffe in das Innere des Getränkebereiters sind mit dieser Lösung vermeidbar. Als Schnelllösemechanismus kann dabei jede Art einer Klemmverbindung, einer Schnappverbindung, eines Bajonettverschlusses oder ähnlicher Einrichtungen zum Einsatz kommen, wobei je ein Teil des Mechanismus in den Getränkebereiter und der jeweils korrespondierende, andere Teil an dem Vorratsbehälter vorgesehen ist.

Hinsichtlich des in der Erfindung zum Einsatz kommenden Entkalkungsmittels ist festzuhalten, dass dieses bevorzugt einen zähflüssigen oder pulverförmigen Zustand beziehungsweise eine aus Pulver gepresste Tablettenform aufweist und das Entkalkungsmittel Zitronensäure, Apfelsäure oder eine andere, biologisch abbaubare Säure ist. Der Einsatz eines pulverförmigen oder in Tablettenform gepressten Entkalkungsmittels, das zusammen mit Wasser eine Säure bildende Eigenschaft aufweist, ermöglicht beispielsweise eine vorteilhafte Portionierung. Das Entkalkungsmittel bildet dabei im Gemisch mit Wasser eine Säure, weil sich Säure in besonders vorteilhafter Weise zum Auflösen von Kalk eignet. Je stärker dissozüerend die Säure ist, umso schneller erfolgt die Befreiung des Strömungsleitungssystems und eventuell darin enthaltener Aggregate von Kalkrückständen. Die Tablettenform oder allgemeiner ausgedrückt die gepresste und somit komprimierte Darreichung des Entkalkungsmittels, beziehungsweise ein pulverförmiges Entkalkungsmittel bieten jedoch darüber hinaus weitere Vorteile. Zunächst kann der Vorratsbehälter im Vergleich zu flüssigen Entkalkungsmitteln oder Kationentauschern verhältnismäßig klein ausgelegt werden. Darüber hinaus besteht bei flüssigen Entkalkungsmitteln ein Exportproblem, das aus dem Verbot der grenzüberschreitenden Überführung von Flüssigkeiten herrührt. Hier sind zumeist aufwändige Zulassungsverfahren erforderlich, um grenzüberschreitend Exporte vornehmen zu können. Ein anderer Vorzug pulverförmiger Entkalkungsmittel ist auch darin zu sehen, dass Pulver auch unter extremen thermischen Bedingungen keine Aggregatzustandänderungen erfährt. So sind Lager- oder Transportbedingungen im Bereich von -20 °C bis +70 °C möglich und können ausschließlich von pulverförmigen Entkalkungsmitteln problemlos überstanden werden, ohne dass Qualitätseinbußen zu befürchten sind. Flüssige Entkalkungsmittel bergen zudem das Risiko, dass bei einer Beschädigung der Verpackung das Entkalkungsmittel ausläuft. Die dadurch hervorgerufenen Schäden sind durch pulverförmige Entkalkungsmittel vermeidbar.

Da es sich bei einer Säure in Abhängigkeit von ihrer Konzentration möglicherweise um ein sehr aggressives Medium handelt, spielt ferner der Schutz der Gesundheit und der Umwelt eine ganz besondere Rolle. Aus diesem Grund ist nicht jede Säure uneingeschränkt für die erfindungsgemäßen Zwecke einsetzbar. Schließlich muss auch daran gedacht werden, dass mit einem derartigen Entkalkungsmittel unter Umständen Laien umgehen. Hier sind Unfallgefahren grundsätzlich auszuschließen. Deshalb wird vorgeschlagen, dass das Entkalkungsmittel Zitronensäure, Essigsäure oder eine andere, biologisch abbaubare Säure ist. Damit treten bei der Entsorgung der Endprodukte des Entkalkungsvorganges keine Probleme mehr auf. Die Säure ist zudem einfach zu handhaben und ruft selbst bei einer gegebenenfalls unsachgemäßen Anwendung keine extrem folgenschweren Schädigungen hervor.

Weiterhin besteht bei Wasser führenden Strömungsleitungssystemen die Gefahr einer Verkeimung des Strömungsleitungssystems. Eine Keimbildung ist insbesondere zu beobachten, wenn die Flüssigkeit über eine gewisse Zeit in dem Strömungsleitungssystem steht und/oder wenn ein warmes Umfeld existiert, das die Keimentwicklung begünstigt. Wird ein derartiges Strömungsleitungssystem nicht regelmäßig hinreichend gereinigt und nicht ebenso regelmäßig von Ablagerungen, wie dem zuvor beschriebenen Kalk, befreit, fördert dies auch eine Verkeimung, was jedoch insbesondere bei Getränkebereitern problematisch ist. Diese Überlegungen haben dazu geführt, dass dem Entkalkungsmittel ein Entkeimungsmittel beigemischt wird, so dass nachfolgend der Begriff "Entkalkungsmittel" synonym dafür zu verstehen ist, dass hier auch ein Entkeimungsmittel enthalten sein kann. Ein derartiges Entkeimungsmittel kann beispielsweise Sorbinsäure sein.

Der erfindungsgemäße einzusetzende Vorratsbehälter, der mit dem bevorzugt pulverförmigen oder in gepresster Form vorliegenden Entkalkungsmittel befüllt wird, weist eine sehr lange Nutzungsdauer auf, weil durch das zugeführte Wasser stets nur ein Teil des Entkalkungsmittels gelöst und an der Strömungsleitungssystem abgegeben wird.

Eine erste Ausgestaltung der Erfindung besteht darin, dass der Vorratsbehälter als ein Einweg- oder ein Mehrwegbehälter ausgeführt ist. Die lange Haltbarkeit infolge des geringen Verbrauchs des Entkalkungsmittels gestattet es durchaus, den Vorratsbehälter als Einwegbehälter auszuführen. Es ist jedoch ebenso möglich, den Vorratsbehälter als Mehrwegvariante auszuführen, sodass dieser jederzeit mit frischem Entkalkungsmittel aufgefüllt werden kann.

Um die Befüllung des Vorratsbehälters mit Entkalkungsmittel so einfach wie möglich zu gestalten, ist es von besonderem Vorteil, wenn der als Mehrwegbehälter ausgeführte Vorratsbehälter durch einen lösbaren Deckel verschlossen ist oder in einem Deckel eine Nachfüllöffnung aufweist. Dies stellt einen Unterschied zu einem Einwegbehälter dar, bei dem der Vorratsbehälter einstückig ausgeführt sein kann oder bei dem die einzelnen Elemente, wie der Deckel und/oder ein Boden mit dem Vorratsbehälter stoffschlüssig verbunden sein können, also beispielsweise verklebt oder mittels Ultraschallschweißung verschweißt sind.

Wie eingangs bereits ausgeführt wurde, weist der Schnelllösemechanismus eines erfindungsgemäßen Getränkebereiters einen Teil des Mechanismus innerhalb des Getränkebereiters und einen korrespondierenden, zweiten Teil an dem Vorratsbehälter oder dessen Deckel auf. Entsprechend einer weiteren Gestaltung dieses Gedankens wird vorgeschlagen, dass in dem Getränkebereiter ein Anschlusskopf vorhanden ist, der eine Kupplung zur form- und/oder kraftschlüssigen Aufnahme des Vorratsbehälters aufweist.

Dabei kann gemäß einer ersten vorteilhaften erfindungsgemäßen Variante dieser Lösung die Kupplung aus einem Anschlusszapfen und aus einer korrespondierenden Aufnahmevorrichtung im Anschlusskopf bestehen, wobei der Anschlusszapfen an der dem Anschlusskopf zugewandten Oberseite des Vorratsbehälters beziehungsweise an seinem Deckel angeordnet oder angeformt ist. Insbesondere die Anformung des Anschlusszapfens am Deckel des Vorratsbehälters stellt eine erhebliche fertigungstechnische Vereinfachung bei der Herstellung des Vorratsbehälters dar. Es bedarf an dieser Stelle keiner besonderen Erwähnung, dass natürlich auch der umgekehrte Fall im Bereich der Erfindung liegt, nämlich, dass der Anschlusszapfen im Anschlusskopf und die korrespondierende Aufnahmevorrichtung an der dem Anschlusskopf zugewandten Oberseite des Vorratsbehälters beziehungsweise an seinem Deckel angeordnet oder angeformt ist.

Eine andere oder ergänzend zu der zuvor beschriebenen Ausführung einsetzbare Möglichkeit der Verbesserung des erfindungsgemäßen Getränkebereiters besteht darin, dass die Kupplung aus wenigstens einem an dem Anschlusskopf vorhandenen Schnapphaken besteht, der einen korrespondierenden Flansch am Vorratsbehälter hintergreifend ausgeführt ist.

Diese Variante kann mit einem Schnapphaken sowohl als Einzellösung zur Darstellung eines Schnelllösemechanismus, als auch ergänzend, also im Zusammenhang mit einem Anschlusszapfen und der zugehörigen Aufnahmevorrichtung zum Einsatz kommen.

Ebenso liegt auch hier der umgekehrte Fall im Erfindungsbereich, nämlich, dass der Schnapphaken am Vorratsbehälter angeordnet und der korrespondierende Flansch am Anschlusskopf vorhanden ist.

Um den Vorratsbehälter mit geringem Aufwand aus dem Getränkebereiter herauslösen und wieder in diesen einsetzen zu können, ist es darüber hinaus von Vorteil, wenn der Schnapphaken elastisch verformbar ist. Über eine an dem Schnapphaken vorhandene Druckfläche kann die Elastizität des Schnapphakens im Sinne eines Schnelllösemechanismus genutzt werden.

Der von dem Schnapphaken hintergriffene Flansch kann sich entsprechend einem weiterführenden Gedanken der Erfindung unmittelbar am Deckel des Vorratsbehälters befinden. Ebenso ist es natürlich auch möglich, einen derartigen Flansch an der Außenmantelfläche des Vorratsbehälters vorzusehen. Welche Variante der Vorzug zu geben ist, richtet sich in erheblichem Maße auch nach dem fertigungstechnischen Aufwand sowie nach den räumlichen Gegebenheiten innerhalb des Getränkebereiters.

Eine weitere Lösung für einen Schnelllösemechanismus besteht erfindungsgemäß darin, dass die Kupplung aus einem an dem Anschlusskopf vorhandenen Klappmechanismus besteht, in den der Vorratsbehälter einsetzbar ist. Nach dem Einsetzen des Vorratsbehälters kann dann der Klappmechanismus um eine Schwenkachse in seine Fixierposition geschwenkt werden. Hierbei wird beispielsweise eine den Klappmechanismus bildende Halterung des Getränkebereiters aufgeklappt, in die der Vorratsbehälter eingeschoben oder eingesetzt werden kann, bevor diese Halterung um die Schwenkachse verschwenkt wird, so dass auf diese Weise der Vorratsbehälter in dem Getränkebereiter fixiert ist.

Besonders vorteilhaft wird darüber hinaus ein Vorschlag nach der Erfindung angesehen, der darin besteht, dass der Vorratsbehälter insgesamt aus Kunststoff oder aus einem Kunststoff-Verbundmaterial hergestellt ist. Diese Werkstoffe sind flüssigkeitsdicht und weisen ein sehr geringes Eigengewicht auf. Ferner ist die Herstellung des Vorratsbehälters aus Kunststoff kostengünstig und einfach umsetzbar. Es können beliebige Geometrien erstellt werden, ohne dass es aufwändiger Nacharbeiten bedarf. Natürlich ist es denkbar, den Vorratsbehälter als einstückiges Kunststoff-Formteil herzustellen. Ein separat hergestellter Deckel sollte abnehmbar sein, um frisches Entkalkungsmittel nachfüllen zu können. Ebenso lässt sich jedoch auch eine Öffnung in dem Deckel vorsehen, durch die das Entkalkungsmittel in die Vorratskammer eingebracht wird. In diesem Fall kann der Deckel fest mit dem Gehäuse des Vorratsbehälters verbunden oder einstückig mit diesem hergestellt werden.

Die Erfindung wird nachfolgend anhand der beigefügten Zeichnungen näher erläutert. Die dargestellten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Getränkebereiter am Beispiel eines als Einzelgerät ausgeführten Kaffeeautomaten,
- Figur 2:: einen Anschlusskopf sowie einen Vorratsbehälter, jeweils als isolierte Einzelteile und in einer Explosivdarstellung,
- Figur 3:: der Anschlusskopf und der Vorratsbehälter aus Figur 2 in einer räumlich gedrehten Ansicht
- und Figur 4:: einen Teilschnitt durch den Anschlusskopf und den oberen Teil eines Vorratsbehälters.

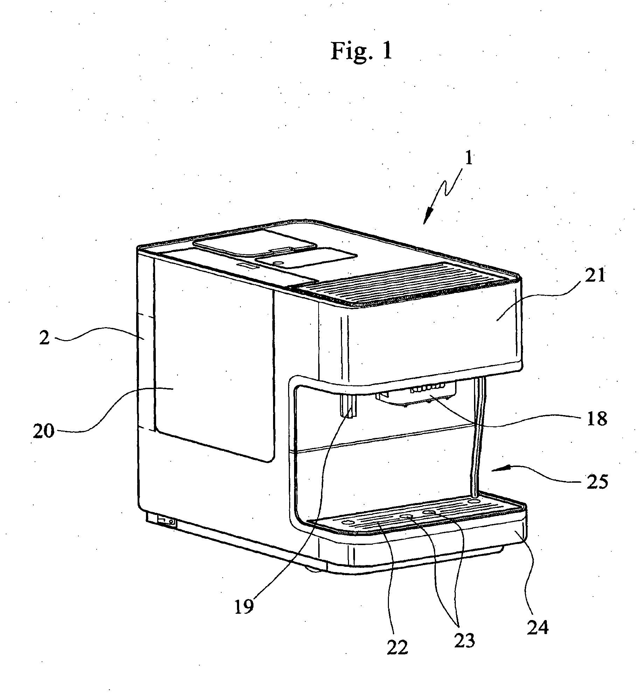

Die Figur 1 veranschaulicht am Beispiel eines Getränkebereiters 1 die Möglichkeit, der Unterbringung eines Vorratsbehälters 6 in einem derartigen Getränkebereiter 1. Hierfür ist seitlich des als Einzelgerät aufstellbaren Getränkebereiters 1 ein Seitenfach 20 vorhanden, dass dem Einsetzen beziehungsweise dem Auswechseln des Vorratsbehälters 2 dient, der im Geräteinneren, hinter diesem Seitenfach 20 angeordnet ist und in der Figur 1 lediglich durch gestrichelte Linien angedeutet wurde. Im Frontbereich des Getränkebereiters 1 verfügt dieser über einen Vorbau 21, in dem sichtgeschützt mehrere Entnahmeeinrichtungen 18, 19 untergebracht sind. Bei der Entnahmeeinrichtung 19 handelt es sich im vorliegenden Fall um eine Dampfdüse zur Abgabe heißen Wasserdampfes. Die Entnahmeeinrichtung 18 stellt hingegen eine Brüheinheit mit mehreren, zur Abgabe von Kaffeegetränken geeigneten Düsen dar. Diese Brüheinheit 18 ist zudem bei dieser Ausführung in der Höhe verschiebbar angeordnet, so dass sie der Höhe eines auf der darunter befindlichen und mit einem Abtropfblech 22 ausgestatteten Abstellfläche 24 abgestellten Trinkgefäßes angepasst werden kann, ohne dass bei der Abgabe des Getränkes unerwünschte Spritzer entstehen. Die Abstellfläche 24 ist analog dem Vorbau 21 hervorstehend ausgebildet, so dass zwischen dem Vorbau 21 und der Abstellfläche 24 eine Mulde 25 zur Aufnahme der Entnahmeeinrichtungen 18,19 entsteht. Den oberen Abschluss der hervorstehenden Abstellfläche 24 bildet das Abtropfblech 22, welches mit mehreren Öffnungen 23 und gegebenenfalls mit Schlitzen versehen ist, um Flüssigkeitsreste in einen hierfür unterhalb des Abtropfbleches 22 vorhandenen Auffangbehälter abzuführen.

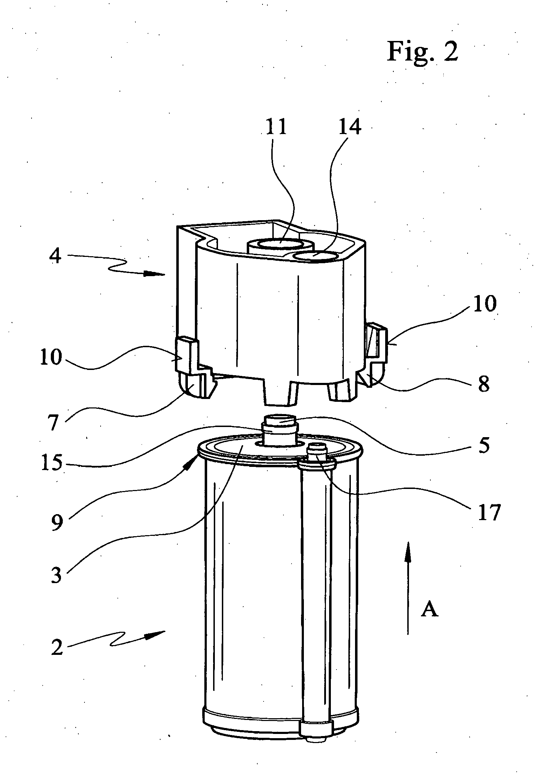

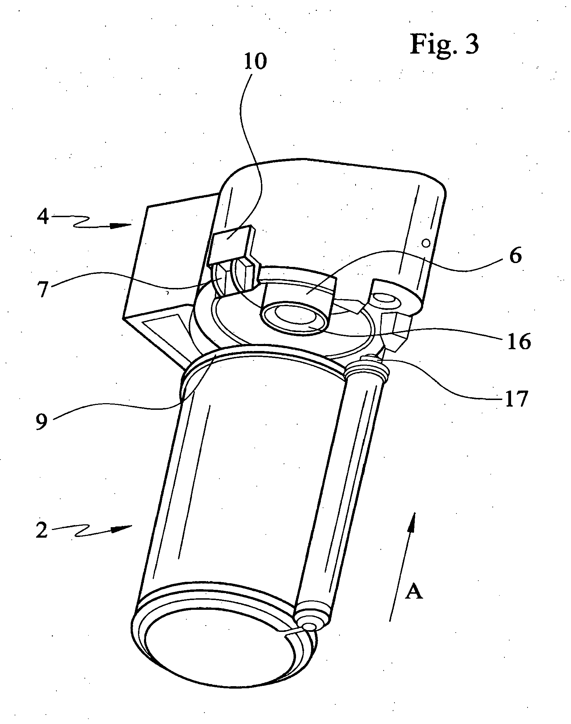

Aus der Figur 2 und der Figur 3 geht jeweils dieselbe Ausführung einer Baueinheit, bestehend aus einem Vorratsbehälter 2 und einem Anschlusskopf 4 in Explosivdarstellung hervor, wobei sich lediglich die Blickrichtungen der Figuren 2 und 3 unterscheiden. So zeigt die Figur 2 eine mehr seitliche Ansicht, während in der Figur 3 eine stärker perspektivische und von der Unterseite her betrachtete Darstellung gezeigt ist.

Der insgesamt aus Kunststoff hergestellte Vorratsbehälter 2 ist in seinem oberen Abschnitt mit einem lösbaren Deckel 3 verschlossen, so dass der Vorratsbehälter 2 im Bedarfsfall mit frischem Entkalkungsmittel befüllt werden kann. Im Randbereich des Deckels 3 weist der Vorratsbehälter 2 einen Flansch 9 auf, der bei in Pfeilrichtung des Pfeils "A" zusammengesetzter Baueinheit als Eingriff für einen an dem Anschlusskopf 4 vorhandenen Schnapphaken 7, 8 dient. Bei der in den Figuren 2 und 3 dargestellten Ausführungsform sind zwei, einander gegenüberliegend angeordnete Schnapphaken 7 und 8 unmittelbar an dem Anschlusskopf 4 angeformt, der ebenfalls aus Kunststoff hergestellt ist. Bestandteil dieser Schnapphaken 7 und 8 ist darüber hinaus je eine Druckfläche 10, mit der die elastisch verformbaren Schnapphaken 7, 8 von Hand verformbar sind, so dass der Eingriff am Flansch 9 und ein Lösen vom Flansch 9 des Vorratsbehälters 2 möglich sind. Mit dieser Schnappverbindung ist ein Schnelllösemechanismus gegeben, der es ermöglicht, den Vorratsbehälter 2 auf einfache Weise aus dem Getränkebereiter zu entnehmen beziehungsweise ihn in den Getränkebereiter einzusetzen.

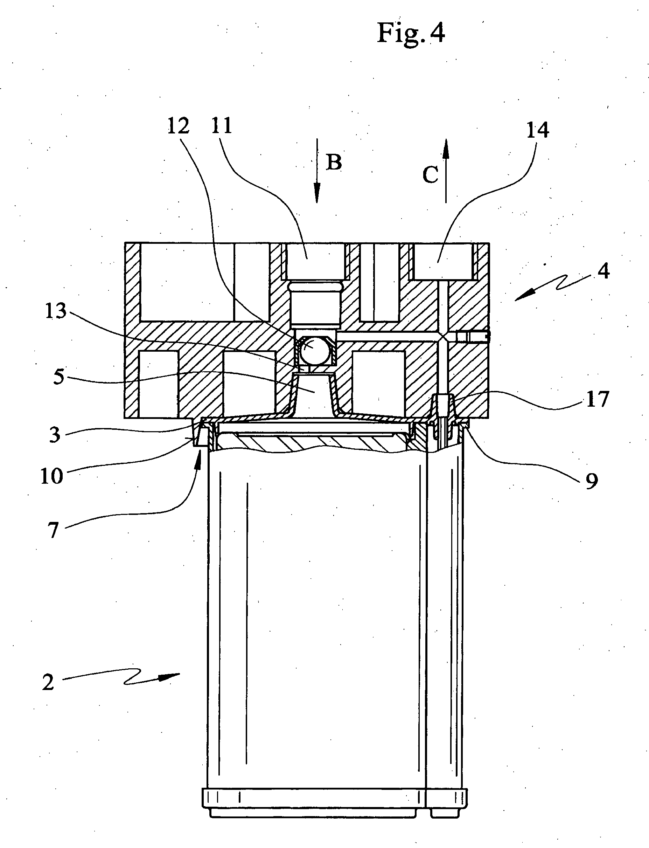

Jedoch weisen der Vorratsbehälter 2 und der Anschlusskopf 4 bei der Ausführung in den Figuren 2 und 3 eine weitere Besonderheit auf. Diese besteht nämlich darin, dass an dem Vorratsbehälter 2 etwa mittig ein Anschlusszapfen 5 angeformt ist, der passgenau und durch eine Dichtung 15 dichtend in eine korrespondierende Aufnahmevorrichtung 6 des Anschlusskopfes 4 eingesetzt wird. Zur Erleichterung der Einführung des Anschlusszapfens 5 in die korrespondierende Aufnahmevorrichtung 6 verfügt die Aufnahmevorrichtung 6 in ihrem Mündungsbereich über einen Konus 16, wie dies anschaulich aus der Figur 3 hervorgeht. In dem Anschlusskopf 4 sind darüber hinaus ein Wasserzulauf 11 und ein Ablauf 14 vorhanden, wobei der Vorratsbehälter 2 zudem einen Auslass 17 für gelöstes Entkalkungsmittel aufweist. Auf den Wasserzulauf 11, den Ablauf 14 und den Auslass 17 wird nachfolgend im Zusammenhang mit der Beschreibung der Figur 4 näher eingegangen.

Die Figur 4 zeigt einen Teilschnitt durch den Anschlusskopf 4 und den oberen Teil des Vorratsbehälters 2 in einer Ausführungsvariante, die der in den Figuren 2 und 3 dargestellten entspricht. In der Figur 4 sind der Vorratsbehälter 2 und der Anschlusskopf 4 lösbar miteinander verbunden. In dem Anschlusskopf 4 ist ein Wasserzulauf 11 vorhanden, der über ein Einwegventil 12 und eine im Querschnitt reduzierte Einlauföffnung 13 den Vorratsbehälter 2 in Richtung des Pfeils "B" immer dann mit frischem Wasser versorgt, wenn ein Entkalkungsvorgang durchgeführt werden soll. Das Einwegventil 12 dient dabei dem Zweck, zu verhindern, dass gelöstes Entkalkungsmittel unmittelbar in eine frisches Wasser führende Strömungsleitung des Strömungsleitungssystems des Getränkebereiters gelangt. Mit anderen Worten soll hier ein Rückfluss verhindert werden. Dieses Einwegventil 12 kann natürlich bei einer abweichenden Variante der Erfindung auch direkt an dem Vorratsbehälter 2 vorgesehen werden, was jedoch nicht Gegenstand der Darstellung in Figur 4 ist. Zwischen dem Wasserzulauf 11 und dem Ablauf 14, dessen Strömungsrichtung durch den Pfeil "C" symbolisiert wird und der dem Anschluss des Vorratsbehälters 2 an das Strömungsleitungssystem dient, sind Strömungsleitungen in den Anschlusskopf 4 eingearbeitet, die jedoch für die Erfindung keine wesentliche Bedeutung haben und daher in der Figur 4 nicht näher bezeichnet sind. Eine Kapillarleitung mündet in den Bodenbereich des Vorratsbehälters 2 und führt nach dem Prinzip der Volumenverdrängung gelöstes Entkalkungsmittel an das Strömungsleitungssystem des Getränkebereiters ab. Der hierfür zum Einsatz kommende Auslass 17 des Vorratsbehälters 2 mündet unmittelbar in den Anschlusskopf 4 und dort in das Strömungsleitungssystem. Dabei wird jeweils nur so viel gelöstes Entkalkungsmittel aus dem Vorratsbehälter 2 verdrängt, wie frisches Wasser über den Wasserzulauf 11 zugeführt wurde. Die Einlauföffnung 13 unterhalb des Einwegventils 12 weist hierzu einen im Vergleich zu dem Wasserzulauf 11 entscheidend reduzieren Leitungsquerschnitt auf, so dass jeweils eine genau dosierbare Menge frischen Wassers über den Wasserzulauf 11 und die Einlauföffnung 13 in den Vorratsbehälter 2 eingelassen werden kann. Deutlich erkennbar wird aus der Figur 4 auch, wie der domartig gestaltete Anschlusszapfen 5 passgenau in die korrespondierende Aufnahmevorrichtung 6 eingesetzt ist und gleichzeitig der Schnapphaken 7 mit seinem hakenförmigen Teil unter den Flansch 9 am Vorratsbehälter 2 greift. Damit ist in doppelter Hinsicht eine Sicherung des Vorratsbehälters 2 an dem Anschlusskopf 4 des Getränkebereiters gegeben und zudem ein Schnelllösemechanismus bereitgestellt.

### BEZUGSZEICHENLISTE:

- 1: Getränkebereiter
- 2: Vorratsbehälter
- 3: Deckel
- 4: Anschlusskopf
- 5: Anschlusszapfen
- 6: Aufnahmevorrichtung
- 7: Schnapphaken
- 8: Schnapphaken
- 9: Flansch
- 10: Druckfläche
- 11: Wasserzulauf
- 12: Einwegventil
- 13: Einlauföffnung
- 14: Ablauf
- 15: Dichtung
- 16: Konus
- 17: Auslass (für gelöstes Entkalkungsmittel)
- 18: Entnahmeeinrichtung
- 19: Entnahmeeinrichtung
- 20: Seitenfach
- 21: Vorbau
- 22: Abtropfblech
- 23: Öffnungen
- 24: Abstellfläche
- 25: Mulde

## Patentansprüche

1. Getränkebereiter mit einem in das Strömungsleitungssystem des Getränkebereiters (1) integrierten Vorratsbehälter (2) zur Aufnahme eines Entkalkungsmittels,
**dadurch gekennzeichnet, dass**
der Vorratsbehälter (2) über einen Schnelllösemechanismus auswechselbar in dem Getränkebereiter (1) aufgenommen ist, wobei der Getränkebereiter einen Anschlusskopf (4) aufweist, dessen Kupplung zur form- und/oder kraftschlüssigen Aufnahme des Vorratsbehälters (2) geeignet ist und in dem Anschlusskopf (4) ein Wasserzulauf (11) und ein Ablauf (14) für den Vorratsbehälter (2) vorhanden sind, wobei der Ablauf (14) zum Anschluss des Vorratsbehälters (2) an das Strömungsleitungssystem dient und der Vorratsbehälter (2) einen Auslass (17) für gelöstes Entkalkungsmittel aufweist.

2. Getränkebereiter nach Anspruch 1,
**dadurch gekennzeichnet, dass**
der Vorratsbehälter (2) als ein Einweg- oder ein Mehrwegbehälter ausgeführt ist.

3. Getränkebereiter nach einem der vorstehend genannten Ansprüche,
**dadurch gekennzeichnet, dass**
der als Mehrwegbehälter ausgeführte Vorratsbehälter (2) durch einen lösbaren Deckel (3) verschlossen ist oder in einem Deckel (3) eine Nachfüllöffnung aufweist.

4. Getränkebereiter nach Anspruch 1,
**dadurch gekennzeichnet, dass**
die Kupplung aus einem Anschlusszapfen (5) und aus einer korrespondierenden Aufnahmevorrichtung (6) im Anschlusskopf (4) besteht, wobei der Anschlusszapfen (5) an der dem Anschlusskopf (4) zugewandten Oberseite des Vorratsbehälters (2) beziehungsweise an seinem Deckel (3) angeordnet oder angeformt ist.

5. Getränkebereiter nach Anspruch 1,
**dadurch gekennzeichnet, dass**
die Kupplung aus wenigstens einem an dem Anschlusskopf (4) vorhandenen Schnapphaken (7, 8) besteht, der einen korrespondierenden Flansch (9) am Vorratsbehälter (2) hintergreifend ausgeführt ist.

6. Getränkebereiter nach Anspruch 5,
**dadurch gekennzeichnet, dass**
der elastisch verformbare Schnapphaken (7, 8) eine Druckfläche (10) aufweist.

7. Getränkebereiter nach Anspruch 5 oder 6,
**dadurch gekennzeichnet, dass**
der Flansch (9) am Deckel (3) oder an der Außenmantelfläche des Vorratsbehälters (2) ausgebildet ist.

8. Getränkebereiter nach Anspruch 1,
**dadurch gekennzeichnet, dass**
die Kupplung aus einem an dem Anschlusskopf (4) vorhandenen Einklappmechanismus besteht, in den der Vorratsbehälter (2) vor dem Verschwenken des Einklappmechanismus um eine Schwenkachse in seine Fixierposition einsetzbar ist.

9. Getränkebereiter nach einem der vorstehend genannten Ansprüche,
**dadurch gekennzeichnet, dass**
der Vorratsbehälter (2) insgesamt aus Kunststoff oder aus einem Kunststoff-Verbundmaterial hergestellt ist.

## Claims

1. Beverage maker comprising a tank (2) which is integrated in the flow conduit system of the beverage maker (1) and is intended to hold a descaling agent, **characterised in that** the tank (2) is received in the beverage maker (1) in such a way that it can be removed by means of a quick-release mechanism, the beverage maker comprising a connecting head (4), the coupling of which is suitable for receiving the tank (2) in an interlocking and/or force-locked manner, and a water inlet (11) and an outlet (14) for the tank (2) being provided in the connecting head (4), the outlet (14) being intended to connect the tank (2) to the flow conduit system and the tank (2) comprising a drain (17) for dissolved descaling agent.

2. Beverage maker according to claim 1, **characterised in that** the tank (2) is designed as a disposable or reusable container.

3. Beverage maker according to any of the preceding claims, **characterised in that** the tank (2) designed as a reusable container is closed by a removable cover (3) or has a refill opening in a cover (3).

4. Beverage maker according to claim 1, **characterised in that** the coupling consists of a connecting pin (5) and a corresponding receiving device (6) in the connecting head (4), the connecting pin (5) being arranged or integrally formed on the upper surface of the tank (2) which faces the connecting head (4), or on the cover (3) of said tank.

5. Beverage maker according to claim 1, **characterised in that** the coupling consists of at least one snap hook (7, 8) which is provided on the connecting head (4) and is designed to engage behind a corresponding flange (9) on the tank (2).

6. Beverage maker according to claim 5, **characterised in that** the elastically deformable snap hook (7, 8) comprises a pressure surface (10).

7. Beverage maker according to either claim 5 or claim 6, **characterised in that** the flange (9) is formed on the cover (3) or on the outer lateral surface of the tank (2).

8. Beverage maker according to claim 1, **characterised in that** the coupling consists of a hinged mechanism provided on the connecting head (4), into which the tank (2) can be inserted prior to the hinged mechanism being pivoted about a pivot axis into its fixed position.

9. Beverage maker according to any of the preceding claims, **characterised in that**, as a whole, the tank (2) is produced from a plastics material or from a plastics composite material.

## Revendications

1. Préparateur de boissons comprenant un réservoir (2) intégré dans le système de conduites d'écoulement du préparateur de boissons (1) et destiné à la réception d'un détartrant, **caractérisé en ce que**
le réservoir (2) est reçu dans le préparateur de boissons (1) de façon remplaçable par le biais d'un mécanisme de démontage rapide, le préparateur de boissons (1) comportant une tête de raccordement (4) dont l'accouplement est approprié à la réception du réservoir (2) par liaison à complémentarité de formes et/ou en force, et une amenée d'eau (11) et une évacuation (14) destinée au réservoir (2) étant prévues dans la tête de raccordement (4), l'évacuation servant à raccorder le réservoir (2) au système de conduit d'écoulement et le réservoir (2) comportant une sortie (17) destinée au détartrant dissous.

2. Préparateur de boissons selon la revendication 1, **caractérisé en ce que** le réservoir (2) est réalisé sous la forme d'un récipient jetable ou réutilisable.

3. Préparateur de boissons selon l'une des revendications citées précédemment,
**caractérisé en ce que**
le réservoir (2) réalisé sous la forme d'un récipient réutilisable est fermé par un couvercle détachable (3) ou comporte un orifice de remplissage ménagé dans un couvercle (3).

4. Préparateur de boissons selon la revendication 1,
**caractérisé en ce que**
l'accouplement comprend une tubulure de raccordement (5) et un dispositif de réception correspondant (6) dans la tête de raccordement (4), la tubulure de raccordement (5) étant disposée ou formée du côté supérieur du réservoir (2) qui est tourné vers la tête de raccordement (4) ou au niveau du couvercle (3) du réservoir.

5. Préparateur de boissons selon la revendication 1,
**caractérisé en ce que**
l'accouplement comprend au moins un crochet d'encliquetage (7, 8) qui est prévu sur la tête de raccordement (4) et qui est réalisé de façon à s'engager en arrière d'une bride correspondante (9) au niveau du réservoir (2).

6. Préparateur de boissons selon la revendication 5,
**caractérisé en ce que**
le crochet d'encliquetage (7, 8) déformable élastiquement possède une surface de pression (10).

7. Préparateur de boissons selon la revendication 5 ou 6,
**caractérisé en ce que**
la bride (9) est formée au niveau du couvercle (3) ou de la surface d'enveloppe extérieure du réservoir (2).

8. Préparateur de boissons selon la revendication 1,
**caractérisé en ce que**
l'accouplement comprend un mécanisme rabattable qui est prévu sur la tête de raccordement (4) et dans lequel le réservoir (2) peut être introduit avant le pivotement du mécanisme rabattable sur un axe de pivotement dans sa position de fixation.

9. Préparateur de boissons selon l'une des revendications citées précédemment,
**caractérisé en ce que**
le réservoir (2) est réalisé dans l'ensemble en matière plastique ou en un matériau composite de matières plastiques.
